# EUROPÄISCHE PATENTANMELDUNG

(11) **EP 0 806 261 A1**
(43) Veröffentlichungstag der Anmeldung: **12.11.1997**
(21) Anmeldenummer: 97107270.7
(22) Anmeldetag: 02.05.1997
(51) Int. Cl.: B23C 3/05

(54) **Verfahren und Werkzeug zur Feinbearbeitung von Ventilführungen von Kraftfahrzeugen**

(30) Priorität: 09.05.1996 DE 19618697
(71) Anmelder: Hüller Hille GmbH, 71636 Ludwigsburg (DE)
(72) Erfinder: Buchholz, Reinhard, 71732 Tamm (DE)
(74) Vertreter: Dahlkamp, Heinrich-Leo

(57) **Zusammenfassung**

Die Erfindung bezieht sich auf ein Verfahren und ein Werkzeug zur spanabhebenden Feinbearbeitung von Werkstücken, insbesondere Ventilführungen an Zylinderköpfen von Kraftfahrzeugen.
Das erfindungsgemäße Verfahren ist dadurch gekennzeichnet, dass sich eine mit dem Werkzeug mitdrehende Auflaufhülse, die während der Bearbeitung mit Hilfe des Kühl- und Schmiermittels hydraulisch gegen eine fertig bearbeitete Fase des Ventilsitzes gepreßt wird, in dieser Fase zentriert und dabei mit ihrer Bohrung das Werkzeug so führt, dass die Bohrung in der Ventilführung nach ihrer Fertigbearbeitung mit großer Genauigkeit konzentrisch zur Fase des Ventilssitzes angeordnet ist.
Erfindungsgemäß wird außerdem ein Werkzeug mit folgenden Merkmalen vorgeschlagen:
a) das Werkzeug (2) ist fest mit der bei der Bearbeitung sich drehenden und axial verschieblichen Werkzeugaufnahme (8, 9) verbunden,
b) mit der Werkzeugaufnahme (8, 9) ist eine Auflaufhülse (1) drehfest aber axial verschieblich verbunden,
c) das Werkzeug (2) ist mit dem vorderen Ende in einer Bohrung (11) der Auflaufhülse (1) geführt und
d) die Auflaufhülse (1) ist während der Bearbeitung gleitend oder rollend direkt oder indirekt auf der Vorderkante (5) des Werkstückes abgestützt.

## Beschreibung

Die Erfindung bezieht sich auf ein Verfahren zur spanabhebenden Feinbearbeitung von Ventilführungen an Zylinderköpfen von Kraftfahrzeugen und auf ein gattungsgemäßes Werkzeug.

In der EP 0 699 494 A1 ist ein Werkzeug, insbesondere zur spanabhebenden Feinbearbeitung von Metall vorgeschlagen, das zwei ineinanderliegende Teilwerkzeuge aufweist, von denen das innenliegende Innenwerkzeug innerhalb des außenliegenden Werkzeugkopfes axial verschiebbar angeordnet ist, wobei zur Axialverschiebung des Innenwerkzeuges eine eigene Antriebseinrichtung vorgesehen ist, die am rückwärtigen Ende des Werkzeuges angeordnet ist und über ein längeres Gestänge mit dem Innenwerkzeug verbunden ist. Diese zusätzliche Antriebseinrichtung für das Innenwerkzeug erfordert einen hohen zusätzlichen apparativen Aufwand und ist relativ instabil. Im Hinblick darauf, dass die Ventilführungen bei heutigen Kraftfahrzeugmotoren immer kleinere Durchmesser (z.B. nur noch 5 mm) haben, werden insofern auch besondere Werkzeuge und besondere Maßnahmen zur spanabhebenden Feinbearbeitung derartig kleiner Ventilführungen erforderlich.

Aus der DE 691 04 663 T2 ist eine Bearbeitungsvorrichtung für Ventilsitze und Ventilführungsbohrungen von Verbrennungskraftmaschinen bekannt, wobei ebenfalls für das Werkzeug zur Bearbeitung des Ventilsitzes und für die Reibahle zur Bearbeitung der Ventilführungsbohrung jeweils ein eigener Vorschubantrieb vorgesehen ist. Der Bearbeitungsablauf erfolgt dabei so, dass zuerst die Ventilsitzfasen gedreht werden und dann die Ventilführungsbohrung fertig gerieben wird. Die Reibahle und das Werkzeug zur Bearbeitung des Ventilsitzes werden dabei zunächst gemeinsam auf einem Werkzeugschlitten bis dicht vor die Ventilführung gefahren, wobei die Reibahle in einer, mit der Spindel umlaufenden Führungshülse radial geführt ist. Eine genaue konzentrische Führung der Reibahle ist hierbei nicht gegeben.

In der DE 32 39 727 A1 ist außerdem für die Bearbeitung von Ventilführungsbohrungen und Ventilsitz eine Haltevorrichtung für den Werkzeughalter beschrieben. Bei einer nicht koaxialen Anordnung der Achsen des Werkzeuges und der Antriebspindel ist dabei eine Haltevorrichtung vorgesehen, um den Werkzeugkörper in radialer Richtung abzustützen. Der Werkzeugschaff stützt sich hierbei während der Bearbeitung des Werkstückes an einer eigenen Halterung ab. Auch hierbei ist die genaue Führung und Zentrierung des Werkzeuges zur Bearbeitung der Ventilführung problematisch.

Der Erfindung liegt die Aufgabe zugrunde, ein Verfahren und ein Werkzeug zur spanabhebenden Feinbearbeitung von Ventilführungen an Zylinderköpfen von Kraftfahrzeugen vorzuschlagen, bei dem die o.g. Probleme nicht bestehen.

Eine Lösung dieser Aufgabe ist sowohl im Anspruch 1 als auch im Anspruch 3 angegeben. Die Unteransprüche 2 und 4 bis 7 enthalten sinnvolle ergänzende Ausführungsformen bzw. Maßnahmen hierzu.

Das erfindungsgemäße Verfahren sieht vor, dass die Auflaufhülse auf der Werkzeugaufnahme mit einem gewissen Reibungswiderstand geführt ist, so dass bei dem Vorschub der Werkzeugaufnahme und des Werkzeuges in Z-Richtung die kegelförmige Auflauffläche der Auflaufhülse ausreichend in der Fase an der Vorderkante des Werkstückes abgestützt und geführt ist. Zusätzlich kann die Auslaufhülse federnd gegenüber der Werkzeugaufnahme abgestützt sein.

Die Anpressung kann aber auch hydraulisch, insbesondere mit Hilfe des unter einem definierten Druck stehenden Kühl- und Schmiermittels erfolgen. Dazu wird erfindungsgemäß ein Raum zwischen der vorderen Stirnwand der Auflaufhülse und der vorderen Stirnfläche der Werkzeugaufnahme zusätzlich mit Kühl- und Schmiermittel beaufschlagt. Dieser Raum ist in einfacher Weise mit im vorderen Teil der Werkzeugaufnahme angeordneten radial und axial angeordneten Zuführungskanälen mit der zentral im Inneren der Werkzeugaufnahme und des Werkzeuges angeordneten Kühl- und Schmiermittelzufuhr verbunden.

Es hat sich darüber hinaus als günstig erwiesen, in der vorderen Stirnwand der Auflaufhülse ein oder mehrere Bohrungen anzuordnen, um eine Verbindung zwischen dem hinter der Stirnwand angeordneten Kühl- und Schmiermittelraum und der Auflagefläche an der Vorderkante des Werkstückes zu schaffen. Dadurch kann die Berührungsfläche mit einer definierten Menge an Kühl- und Schmiermittel beaufschlagt werden, so dass ein hydrodynamisches Lager gebildet wird.

Ergänzend oder auch alternativ kann sich die Auflaufhülse auch über ein Kugellager oder ein ähnliches Lager gegenüber dem Werkstück abstützen. An der Vorderkante der Auflaufhülse kann auch ein Zwischenring angeordnet sein, der keine oder nur eine geringe Relativbewegung gegenüber dem Werkstück ausführt und über ein Kugellager oder in ähnlicher Weise drehbeweglich mit der Auflaufhülse verbunden ist.

Bei der erfindungsgemäßen Lösung wird insbesondere auf den zusätzlichen Antrieb zur axialen Verschiebung des Werkzeuges gegenüber der umgebenden Auflaufhülse verzichtet. Das Werkzeug ist dazu sowohl drehfest als auch in axialer Richtung fest mit der Werkzeugaufnahme verbunden und wird in üblicher Weise angetrieben. Am vorderen Ende ist das Werkzeug darüber hinaus von einer Auflaufhülse umgeben, die mit dem vorderen Ende der Werkzeugaufnahme drehfest aber relativ dazu axial verschieblich verbunden ist. Das Werkzeug ist mit seinem vorderen Ende in einer Bohrung der Auflaufhülse geführt. Während der Bearbeitung stützt sich die Auflaufhülse mit ihrer Spitze direkt oder indirekt auf der Vorderkante des Werkstückes gleitend oder rollend ab. Günstig ist es dabei, wenn die Vorderkante der Auflaufhülse eine kegelige Auflauffläche besitzt, die in einer entsprechenden Fase, insbesondere in einer fertig bearbeiteten Fase des Ventilsitzes geführt und zentriert wird, damit die Bohrung in der Ventilführung nach ihrer Fertigbearbeitung mit großer Genauigkeit konzentrisch zur Fase des Ventilsitzes angeordnet ist.

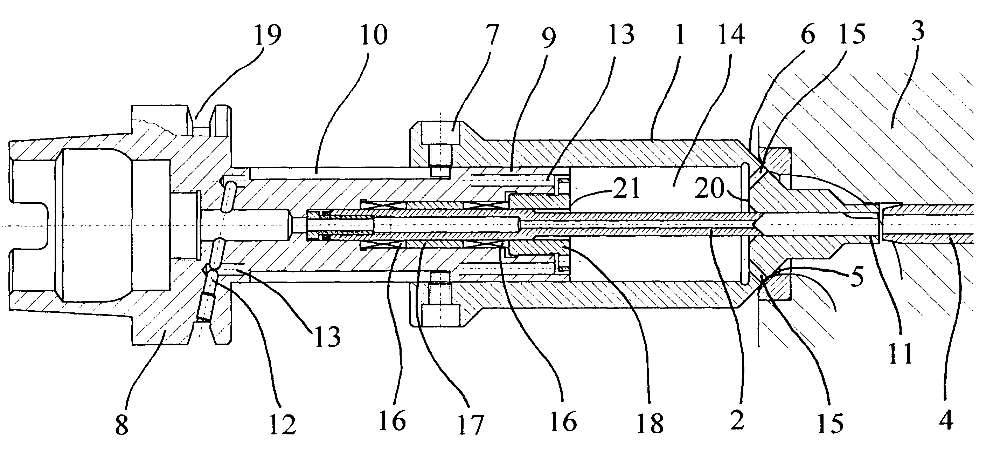

Die Erfindung wird anhand der beigefügten Figur beispielsweise näher erläutert. Die Figur zeigt im Schnitt einen kompletten Werkzeugkopf, der über die Werkzeugaufnahme 8 in üblicher Weise automatisch mit der Antriebsspindel fest verbunden wird. Die Werkzeugaufnahme 8 besitzt an ihrem äußeren Umfang eine Rille 19 für einen Werkzeughalter. Mit der Werkzeugaufnahme 8 ist fest über Spannhülsen 16, einen Zwischenring 17 und eine Spannschraube 18 das Werkzeug 2 verbunden. Das Werkzeug 2 ist von einer Auflaufhülse 1 umgeben, die auf dem vorderen zylindrischen Teil 9 der Werkzeugaufnahme 8 in axialer Richtung verschieblich angeordnet ist. In dem zylindrischen Teil 9 befinden sich am äußeren Umfang verteilt axial angeordnete Führungsnuten 10, in denen die Spitzen der in der Auflaufhülse 1 angeordneten Schrauben 7 zur Verdrehsicherung geführt sind.

Im vorderen Ende der Auflaufhülse 1 ist eine zentrale Bohrung 11 angeordnet, in der die Spitze des Werkzeuges 2 während der Bearbeitung geführt ist. Die Auflaufhülse 1 besitzt eine kegelförmige vordere Auflauffläche 6, die während der Bearbeitung vor dem Ventilsitzring 5 gleitend anliegt. Zur Herstellung eines hydrodynamischen Lagers wird über die Bohrungen 15 aus dem Raum 14 Kühl- und Schmiermittel zugeführt. Dieses Kühl- und Schmiermittel wird innen durch die Werkzeugaufnahme 8 über die Durchtrittsöffnungen 12 und die Zuführungskanäle 13 in den Raum 14 zugeführt. Der Raum 14 wird einerseits durch die zylindrische Auflaufhülse 1 und andererseits durch die Stirnwand 20 der Auflaufhülse 1 sowie durch die Stirnfläche 21 der Werkzeugaufnahme 8, 9, 18 gebildet, so dass sich automatisch ein gleichmäßiger, definierter Anpreßdruck der kegelförmigen Auflauffläche 6 gegen den Ventilsitzring 5 ergibt.

In der Figur ist zusätzlich der Zylinderkopf 3 mit der Ventilführung 4 ausschnittsweise dargestellt.

Das in der Beschreibung erwähnte Kugellager ist in der Figur nicht dargestellt.

### Bezugszeichenliste:

- 1: Auflaufhülse, axial verschieblich gegenüber 2
- 2: Werkzeug, Reibahle zur Bearbeitung von 4
- 3: Zylinderkopf
- 4: Ventilführung in 3
- 5: Ventilsitzring an 3
- 6: kegelförmige Auflauffläche von 1
- 7: Schrauben zur Verdrehsicherung
- 8: Werkzeugaufnahme
- 9: vorderer zylindrischer Teil von 8
- 10: Führungsnut in 9 für 7
- 11: Bohrung in 1 für 2
- 12: Durchtrittsöffnung für Kühl- und Schmiermittel
- 13: Zuführungskanal für Kühl- und Schmiermittel
- 14: Raum für Kühl- und Schmiermittel
- 15: Bohrungen
- 16: Spannhülsen
- 17: Zwischenring
- 18: Spannschraube
- 19: Rille für Werkzeughalter
- 20: Stirnwand von 1
- 21: Stirnfläche von 8, 9, 18

## Patentansprüche

1. Verfahren zur spanabhebenden Feinbearbeitung von Ventilführungen an Zylinderköpfen mit rotierendem Werkzeug, **dadurch gekennzeichnet,** dass sich eine mit dem Werkzeug mitdrehende Auflaufhülse, die während der Bearbeitung mit Hilfe des Kühl- und Schmiermittels hydraulisch gegen eine fertig bearbeitete Fase des Ventilsitzes gepreßt wird, in dieser Fase zentriert und dabei mit ihrer Bohrung das Werkzeug so führt, dass die Bohrung in der Ventilführung nach ihrer Fertigbearbeitung mit großer Genauigkeit konzentrisch zur Fase des Ventilssitzes angeordnet ist.

2. Verfahren nach Anspruch 1, **dadurch gekennzeichnet,** dass die Berührungsfläche zwischen Auflaufhülse und Werkstück mit Kühl- und Schmiermittel beaufschlagt wird.

3. Werkzeug zur spanabhebenden Feinbearbeitung von Ventilführungen an Zylinderköpfen von Kraftfahrzeugen mit folgenden Merkmalen:
a) das Werkzeug (2) ist fest mit der bei der Bearbeitung sich drehenden und axial verschieblichen Werkzeugaufnahme (8, 9) verbunden;
b) mit der Werkzeugaufnahme (8, 9) ist eine Auflaufhülse (1) drehfest aber axial verschieblich verbunden;
c) das Werkzeug (2) ist mit dem vorderen Ende in einer Bohrung (11) der Auflaufhülse (1) geführt und
d) die Auflaufhülse (1) ist während der Bearbeitung gleitend oder rollend direkt oder indirekt auf der Vorderkante (5) des Werkstückes abgestützt.

4. Werkzeug nach Anspruch 3, **dadurch gekennzeichnet,** dass in der vorderen Stirnwand (20) der Auflaufhülse (1) ein oder mehrere Bohrungen (15) zur Zuführung von Kühl- und Schmiermittel in die Gleitebene zwischen einer kegelförmigen Auflauffläche (6) der Auflaufhülse (1) und einer ebenfalls kegeligen Fase des Ventilsitzringes (5) im Werkstück (3) angeordnet sind.

5. Werkzeug nach Anspruch 3 oder 4, **dadurch gekennzeichnet,** dass die Auflaufhülse (1) sich gegenüber der Vorderkante (5) des Werkstückes (3) und/oder gegenüber einem sich auf der Vorderkante (5) abstützenden Zwischenring über ein Kugellager oder ein ähnliches Lager abstützt.

6. Werkzeug nach Anspruch 3, 4 oder 5, **dadurch gekennzeichnet,** dass zur Anpressung der kegelförmigen Auflauffläche (6) der Auflaufhülse (1) gegen die Fase des Ventilsitzringes (5) im Werkstück (3) der Raum (14) zwischen der Stirnwand (20) der Auflaufhülse (1) und der Stirnfläche (21) der Werkzeugaufnahme (8) zur Beaufschlagung von Kühl- und Schmiermittel mit im vorderen Teil (9) der Werkzeugaufnahme (8) angeordneten Zuführungskanälen (13) in Verbindung steht.

7. Werkzeug nach einem der Ansprüche 3 bis 6, **dadurch gekennzeichnet,** dass die Auflaufhülse (1) radial angeordnete Schrauben (7) oder ähnliche Elemente besitzt, die in am Umfang des vorderen Teiles (9) der Werkzeugaufnahme (8) in axialer Richtung angeordneten Führungsnuten (10) bewegbar sind.
